(19) Europäisches Patentamt
European Patent Office
Office européen des brevets

(11) EP 0 642 595 B1

(12) **EUROPEAN PATENT SPECIFICATION**

(45) Date of publication and mention
of the grant of the patent:
**31.07.1996 Bulletin 1996/31**

(51) Int Cl.[6]: **C22B 34/12**, C22B 3/02,
C22B 3/06
// C22B11:00

(21) Application number: **93911364.3**

(22) Date of filing: **25.05.1993**

(86) International application number:
**PCT/US93/04787**

(87) International publication number:
**WO 93/24669 (09.12.1993 Gazette 1993/29)**

(54) **CONTINUOUS ORE REACTION PROCESS**

KONTINUIERLICHES REAKTIONSVERFAHREN FÜR ERZE

PROCEDE DE REACTION DE MINERAI EN CONTINU

(84) Designated Contracting States:
**DE GB**

(30) Priority: **29.05.1992 US 890426**

(43) Date of publication of application:
**15.03.1995 Bulletin 1995/11**

(73) Proprietor: **E.I. DU PONT DE NEMOURS AND
COMPANY
Wilmington Delaware 19898 (US)**

(72) Inventors:
• **RENNIE, Foster W.
Wilmington, DE 19808 (US)**
• **CHAO, Tze
Newark, DE 19711 (US)**

• **EASTHAM, Donald H.
Victoria, TX 77904-3324 (US)**
• **TARBELL, James V.
Hockessin, DE 19707 (US)**

(74) Representative: **Woodcraft, David Charles et al
BROOKES & MARTIN
High Holborn House
52/54 High Holborn
London, WC1V 6SE (GB)**

(56) References cited:
WO-A-92/20827           DE-A- 3 229 436
GB-A- 2 028 159         US-A- 3 468 633
US-A- 3 529 933         US-A- 3 929 963
US-A- 3 940 252         US-A- 4 562 048
US-A- 5 011 666

**Description**

BACKGROUND OF THE INVENTION

This invention relates to an improved continuous ore reaction process. While other ore reaction processes are known, they appear to have one or more deficiencies. Benefits of the process of this invention and some of the deficiencies of prior art processes which are overcome with the process of this invention include:

(1) the ability to operate efficiently and economically at pressures in excess of atmospheric,
(2) the ability to remove efficiently and economically fine particles of ore which are part of the ore introduced into the process or which are generated during the process,
(3) the ability to cool rapidly the ore slurry exiting the process and to retard flow of liquid reagent out of the process,
(4) the ability to operate efficiently and economically on a continuous basis,
(5) the ability to operate without any moving parts in the reactor such as paddle blades or stirring mechanisms requiring complex sealing mechanisms, all of which would be subject to excessive corrosion and erosion, especially at elevated temperatures and pressures,
(6) the ability to construct the reactor of acid resistant brick, rather than expensive metals or alloys, because there are no moving parts, and
(7) the ability to calculate optimum fluidization for carrying out an optimum reaction process.
(8) the ability to achieve a staging effect of a counter-current stirred tank leaching reactor.

It should be noted that items (5) and (6) are important because at elevated temperatures, and especially above about 150°C, only expensive metals and alloys resist attack by acid. Thus, the process of this invention permits the construction of a reactor system which both can operate at high temperatures and can utilize inexpensive materials of construction. Similarly, item (3) is important because it permits the use of inexpensive materials of construction downstream of the reactor to receive the reacted ore.

In contrast, U.S. Patent 3,529,933, which discloses counter-current leaching of ore in a vertical column, requires moving valved aperatures to regulate the proper upward flow of acid and downward flow of ore.

SUMMARY OF THE INVENTION

A continuous process for reacting particulate ore with a liquid reagent in a counter-current vertical column, wherein liquid reagent is introduced at the bottom of the column, particulate ore is introduced at the the top of the column, reacted particulate ore is removed at the bottom of the column, and spent liquid reagent is removed at the top of the column, characterised by:

(a) providing an upper and lower chamber for the vertical column, each of said chambers having a bottom outlet with a diameter which is less than that of the diameter of the chamber:
(b) maintaining sufficient upward flow of liquid reagent in the upper chamber so that the particulate ore is wetted and deaerated, at least some fine particles thereof are carried overhead for removal, and the remainder thereof settle and enter the lower chamber,
(c) maintaining sufficient fluidization and retention time in the lower chamber so that the desired amount of reaction with the ore takes place, a fluidization index is maintained in the low chamber of 1-2, at least some of the fine ore particles which are generated from the reaction process and/or which are introduced with the particulate ore are entrained and carried upward for removal, and the reacted particulate ore exits the lower chamber.

In accordance with a preferred embodiment of this invention there is provided:

A continuous process for leaching particulate ore with acid in a counter-current vertical column, wherein acid is introduced at the bottom of the column, particulate ore is introduced at the top of the column, leached particulate ore is removed at the bottom of the column, and spent acid is removed at the top of the column, characterised by:

(a) providing an upper and lower chamber for the vertical column, each of said chambers having a bottom outlet with a diameter which is less than that of the diameter of the chamber;
(b) maintaining sufficient upward flow of acid in the upper chamber so that the particulate ore is wetted and deaerated, at least some fine particles thereof are carried overhead for removal, and the remainder thereof settle and enter the lower chamber;
(c) maintaining sufficient fluidization and retention time in the lower chamber to achieve a fluidization index of 1-2 and so that the desired amount of impurities are leached from the particulate ore, at least some of the fine ore particles which are generated from the leaching process and/or which are introduced with the particulate ore are entrained and carried upward for removal, and the leached particulate ore exits the lower chamber.

DETAILED DESCRIPTION OF THE INVENTION:

General Process Description

The process of this invention is suitable for any process which reacts particulate ore with a liquid reagent. By "react" is meant to dissolve, leach, oxidize, reduce, complex, crystalize, intercalate or otherwise react or any combination thereof.

The process of this invention utilizes a vertical column having an upper chamber and a lower chamber. The primary purpose of the upper chamber is to wet the particulate ore being fed with the liquid reagent, deaerate it, and carry upward for removal some of the ore fines. While not its main function, some ore reacting may take place in the upper chamber. The purpose of the lower chamber is to carry out the reacting process and and also to permit ore fines which are generated to be carried off overhead to the upper chamber. In a preferred embodiment of this invention, the diameter of the upper chamber will be at least twice that of the lower chamber.

Generally, the fluidization index for the upper chamber and the lower chamber will be within a range sufficient to carry out the functions mentioned in the preceding paragraph. The fluidization index is defined as follows:

$$X = L/Gmf + [(S/Gmf) \times (P_1) \times (E/(P_s)(1\text{-}E)]$$

wherein

$X$ = the fluidization index
$L$ = the liquid upflow rate
$S$ = the solid downflow rate
$Gmf$ = the minimum fluidization velocity for a bed of solids from which no solids are withdrawn
$P_1$ = the liquid density
$P_s$ = the solid density
$E$ = the void fraction at the design condition.

Preferably, the fluidization index in the upper chamber will be about 5-6, more preferably about 5.1-5.9, and most preferably about 5.4-5.6. An especially preferred fluidization index for the upper chamber is about 5.5. Preferably, the fluidization index in the lower chamber will be about 1.1-1.9, and most preferably about 1.4-1.6. An especially preferred fluidization index for the lower chamber is about 1.5. Under preferred conditions, there generally will not be global mixing of the particulate ore.

Usually, each chamber will have a bottom outlet which has a diameter less than that of the diameter of the chamber. Preferably, the outlet of each chamber will be funnel shaped. Preferably, the angle of the funnel will be greater than the angle of repose of the particulate ore which will be processed.

An important aspect of the process of this invention is that it can be operated under pressure. If the process is operated under pressure, and dry, particulate ore is used, a suitable feed device will be needed to introduce the ore into the upper chamber. Such a suitable device is a dual lock hopper. In such device, ore enters an upper chamber which is periodically sealed off at the feed point. Then, the ore is allowed to flow out of an exit opening into a second chamber, which is then sealed off so that the ore therein can be fed to the pressurized column. An alternative means for feeding ore into the pressured column is to incorporate the ore in a liquid to make a slurry or to incorporate the ore in the liquid reagent to make a slurry either of which is then fed to the reactor.

In another important aspect of this invention, liquid is injected in the outlet or a conduit leading from the outlet of the lower chamber, and such injection is made at a sufficient volume and velocity (a) to cool said reacted particulate ore and liquid reagent exiting the lower chamber, and (b) to restrict the downward flow of said liquid reagent. Because of the cooling that this aspect of the invention effectuates, the receiving vessel for the reacted ore can be constructed of less expensive materials than would be required if the cooling did not take place. Also, restricting the flow of liquid reagent in this manner results in less waste of liquid reagent because less of it exits the process with the ore.

Still another aspect of this invention is its ability to operate without any moving parts in the reactor such as paddle blades or stirring mechanisms requiring complex sealing mechanisms, all of which would be subject to excessive corrosion and erosion, especially at elevated temperatures and pressures. And, because this invention does not require any moving parts, the reactor itself can be constructed of inexpensive acid resistant brick.

Liquid Reagents for Process of this Invention

Suitable reagents for use in the process of this invention include those which dissolve, leach, oxidize, reduce, complex, crystalize or intercalate or otherwise carryout the desired reaction with the ore. Examples of suitable reagents include acids, bases, complexing agents, oxidizing agent, and reducing agents, either alone or in a solution or dispersion in aqueous media.

Suitable acids for use in the process of this invention include mineral acids such as hydrochloric acid, nitric acid, sulfuric acid, phosphoric acid, hydrofluoric acid, and mixtures thereof. Especially preferred are hydrochloric acid, nitric acid, hydrofluoric acid, and mixtures thereof. Most especially preferred is hydrochloric acid, especially for leaching of titanium ores or titanium-containing materials.

Aqueous solutions of cyanide can also be used as a leaching agent to dissolve gold or silver from certain ores so that they can then be recovered.

Examples of suitable bases include alkali metal compounds including sodium hydroxide, sodium carbonate, potassium hydroxide, potassium carbonate, lithium hydroxide, and lithium carbonate. Preferred are sodium hydroxide and sodium carbonate. Most preferred is sodium hydroxide.

The liquid reagent should be utilized in an effective amount, i.e., an amount and concentration sufficient to carry out the desired amount of reaction with the particulate ore. Often at least 10 percent, preferably at least 30 percent and most preferably at least 50 percent of the theoretical amount of reaction with the ore will take place. For example, if the liquid reagent is an acid or a base, it will be used in an amount sufficient to solubilize substantially the impurities desired to be removed. Analysis of the leachate, i.e., the acid or base solution containing the dissolved impurities, and the leached ore can readily determine whether or not the amount and/or concentration of acid is sufficient.

Typically, the liquid reagent will be in the form of an aqueous solution or suspension of the active ingredient. Often, the concentration of the active ingredient in the liquid reagent will be about 0.5-50%, preferably about 3-30%, and most preferably about 15-25% by weight, based on the total weight of the solution or dispersion. If sulfuric acid is used for the beneficiation of titanium-containing ore, then lower concentrations within the foregoing ranges may be preferable because higher concentrations of sulfuric acid may dissolve undesirable amounts of $TiO_2$.

Temperature, Pressure, Residence Time and Other Parameters

The reaction should take place at a temperature and pressure, and for a time which is sufficient to carry out the desired amount of reaction with the particulate ore.

Ordinarily, the residence time of the ore in the process of this invention will be at least about 5 minutes. Typical ranges of time are about 10 minutes to four hours, preferably about 10 minutes to two hours and most preferably about 10 minutes to one hour.

The temperature will ordinarily be about ambient to 300°C. For many ores, improved results will often be obtained (e.g. less residence time of ore in the process and improved reaction or removal of impurities) at temperatures in excess of ambient up to about 300°C., preferably about 100-300°C, more preferably about 150-300°C, and most preferably about 160-250°C. For titanium dioxide containing ores, a preferred range is about 150-250 and more preferably about 190-210°C.

Suitable results can often be obtained by operation at atmospheric pressure. However, improved results can often be obtained by operation at pressures in excess of atmospheric such as about 2.07-101.3 bars (2-100 atmospheres), preferably about 5.07-75.95 bars (5-75 atmospheres), and most preferably about 10.13-60.75 bars (10-60 atmospheres). Often the pressure will generally be autogenous, i.e. that generated in the closed process vessel under the reacting conditions. However, additional pressurization can be added, if desired, which may speed removal of impurities from some ores. Note that a pressurized system can also be desirable to condense vaporized acid and thus minimize its loss.

Generally, at least some of the fine ore particulates which are generated from the reaction process and/or which are introduced with the particulate ore are entrained and carried upward for removal. Often, at least about 10 percent, preferably at least about 30 percent, and most preferably at least about 50 percent by weight of such fine ore particulates will be entrained and carried upward for removal. The particle size of the fine particulates which are carried upward for removal can vary depending on the density of the liquid reagent and the ore, the desired degree of reaction, and the desired particulate size of the ore exiting the reactor. Often, the size of the particles which are carried upward for removal can be adjusted by manipulating the flow rates, temperature, and/or diameter of the reactor.

Generally, the solids concentration in the upper and lower chamber of the column will be about 10-70 percent, preferably about 15-60 percent and most preferably about 20-60. Optimum results are often obtained at about 40-60 percent and especially about 45-55 percent. As used in this paragraph, the percentages are by weight, based on the total weight of the liquid reagent and ore.

In a preferred embodiment of this invention, an acid or base or any other suitable chemical reactant will be used to solubilize substantially the impurities in the ore. By the term "solubilize substantially," as used herein to describe the process of this invention where acid or base is used, is meant the concentration of acid or base and conditions of temperature, pressure, and time which will solubilize at least about 10% by weight of the total impurities. Preferably, at least 50% of the total impurities will be solubilized. Often, a graph of the concentration of the acid or base and conditions of temperature and time, compared to the amount of impurities removed will help to determine trends and optimizations.

Drawing

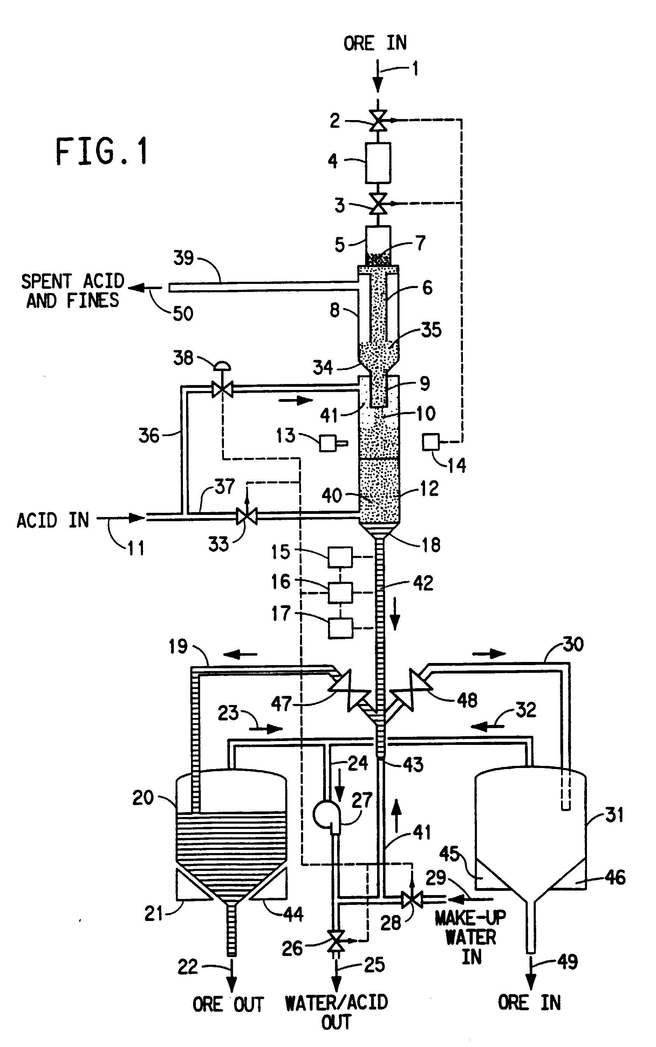

The process of this invention and its operation are illustrated by reference to the drawing. The drawing depicts a process operating under pressure, but it is understood that the process of this invention can be operated under atmospheric pressure. The process depicts a process wherein the liquid reagent is an aqueous solution of acid. It is understood, however, that any other liquid reagents could be used which is suitable to carry out the desired reaction on the particulate ore being treated.

In the drawing, particulate ore enters the process at point 1, and passes into lock hopper 4 and then into lock hopper 5. Valves 2 and 3 regulate the flow of ore, which are controlled by radiation emitter 13 and sensor 14, which detect the level of ore needed in the process. Valves 2 and 3 have control logic so that both are not open at the same time, which permits ore to enter the pressurized process. Note that if the process were operating under atmospheric pressure, this dual lock hopper system would not be needed. An alternative method for feeding the ore would be to introduce the ore into the process in the form of a slurry.

Ore 7 then enters the upper chamber 8 through feed tube 6. Funnel conduit 9 forms the lower part of the upper chamber 8 and permits a reservoir of ore 35 to be maintained in the upper chamber 8.

Ore exits the upper chamber 8 at point 10 and enters lower chamber 12. Acid is fed to the process at point 11, and then enters lower chamber 12 through pipes 36 and 37. While pipe 36 is optional, it represents a preferred embodiment which may enhance the entrainment of fine particles of ore in the upward flowing acid so that they can be removed through pipe 39.

The flow rate of acid is controlled by valve 33 and, if necessary, valve 38. Often, a relatively constant flow of acid will be desirable.

Flow through valve 33 will depend on the solids flow rate and the particle size. Sensors 15, 16, and 17, and their associated control logic, actuate valves 26 and 28 and the flow of make-up water 29 in and water/acid out of the process. Spent acid and ore fines exit the process at point 9 through pipe 39.

A reservoir of ore 40 is maintained, preferably under fluidized conditions, in lower chamber 12 so that the desired reacting takes place. Fine particulate ore 41 generated in the reacting process taking place in the lower chamber 12 rises and enters the upper chamber 8 through funnel conduit 9.

Leached ore/acid slurry 42 exits lower chamber 12 through funnel conduit 18. Water 29 enters the funnel conduit 18 through pipe 41 and interfaces the leached ore acid slurry 42 at point 43. The water 29 cools the leached ore/acid slurry 42 so that the receiving vessels 20 and 31 can be constructed of less expensive materials. The water 29 also retards the flow of the leached ore/acid slurry 42 so that it can be directed through pipes 19 and 30 to receiving vessels 20 and 31.

Weight sensors 21, 44, 45, and 46 detect the amount of ore in receiving vessels 20 and 31. Valves 47 and 48 are connected to weight sensors 21, 44, 45, and 46 (not shown in Drawing so that other features can be shown) by control logic so that the leached ore can be shunted to either of receiving vessels 20 or 31. In lieu of the two receiving vessels, there can be used a single receiving vessel, filtering means or other separation means such as a centrifuge. Acid separated from the leached ore is removed from receiving tanks 20 and 31 through pipes 20 and 31. The leached ore exits the process at points 22 and 49.

## Ore

It is believed that any suitable ore can be used in the process of this invention. Suitable ores include those in which the metal desired to be recovered, upgraded in purity or concentrated include titanium, niobium, nickel, cobalt, copper, zinc, lead, cadmium, aluminum, silver, and gold. Preferred are titanium-containing ores including those ores in the form of ilmenite and anatase (including anatase from a carbonatite source such as Brazilian anatase). As used herein, the term "ore" includes the raw ore itself, ore which has been beneficiated or upgraded by other processes or ore which is the by-product of other processes. Examples of such by-products include Sorel's slag, which is a by-product obtained during iron production from a titanium-containing iron ore in Sorel, Canada, and fine ore blown over from a fluidized bed reactor for chlorinating $TiO_2$ ore. Such a reactor is often used as the first step in the chloride process for making titanium dioxide pigment.

## Ore Impurities

The impurities which are suitable for removal in accordance with the process of this invention, and especially when an aqueous solution of acid is used for a leaching process, include alkali metals, alkaline earth metals, rare earth metals, iron, aluminum, phosphorus, thorium, uranium, chromium, manganese, vanadium and yttrium. Especially suitable for removal by the process of this invention are the impurities of iron, phosphorus, aluminum, calcium, barium, strontium, chromium, manganese, vanadium, yttrium, lanthanum, cerium, neodymium, thorium, and uranium. The impurities of phosphorus, aluminum, iron, calcium, barium, strontium, and radionuclides such as thorium and uranium are especially detrimental to the chloride process for making $TiO_2$ pigment; such impurities are especially suitable for reduction to acceptable levels by the process of this invention under conditions of elevated temperatures and pressures. Also, while the impurities of aluminum, rare earths, phosphorus, thorium, and uranium are especially resistant to removal by conventional chemical or mechanical means, they are especially suitable for reducing to acceptable levels by the process of this invention under conditions of elevated temperatures and pressures.

## Particle Size of Ore

For the process of this invention, preferably, the ore should be in particulate form. The optimum particle size for any ore desired to be processed can readily be determined by comminuting (such as by grinding, crushing, milling, etc.) the ore into several different particle sizes and evaluating the amount of impurities removed by the process of this invention.

Generally, it can be desirable to liberate the minerals to be separated from the ore, i.e., to comminute the ore into as fine particles as practical so that discrete minerals or nearly discrete minerals in the particles are improved.

Ordinarily, the ore should have a particle size of less than about one-fourth inch. Preferably, the ore will have a particle size of about -20 mesh to +400 mesh. Of course, some ores in their natural state have a particle size within this range. If so, additional comminuting is not necessary.

## Mineral Dressing of Ore

If desired, the ore can be subjected to mineral dressing prior to subjecting to the process of this invention. By mineral dressing is meant mechanical processes which can remove some of the undesired impurities, including de-sliming (removing fine particles by a cyclone, grating or settling process), crushing, grinding, classification, screening, flotation, electrostatic separation and magnetic separation. The magnetic separation can include low, medium and high intensity magnetic field strength and/or gradient; including, preferably, staged magnetic separation sequential through low, medium and high intensity magnetic field strengths. Suitable mineral dressing processes are disclosed in U.S. Patent 4,243,179, which is hereby incorporated by reference. If mineral dressing is used, it can be designed to reduce the ore to the desired particle size in order to satisfy both mineral liberation and preferred particle size for use in the process of this invention.

## Low Temperature Reductive Roasting and Magnetic Separation

Optionally if the ore is of ferrogenous origin, prior to the reaction process of this invention, the ore can be subjected to low temperature reductive roasting. The purpose of such low temperature reductive roasting is to convert some of the iron-bearing minerals in the ore to magnetic form, if present, which then can be removed by magnetic separation techniques.

If low temperature reductive roasting is used, it generally will be carried out at a temperature in excess of ambient conditions up to about 400°C, in the presence of a carbonaceous reducing agent. Preferably the temperature will be about 200-400 and most preferably about 250-300° C. Suitable carbonaceous reducing agents include coke, lignite char, charcoal, coal, lignite, petroleum such as residual oil, carbon monoxide, producer gas, hydrogen, gaseous hydrocarbons, and natural gas. Preferred is carbon monoxide. Note that to use reducing agents other than carbon monoxide, the roasting temperature should exceed about 300°C. The roasting should take place under reductive conditions, i.e., in the substantial absence of air or oxygen or under conditions which favor reduction rather than oxidation.

If low temperature roasting is used, it can be carried out by any suitable means, process or device. For example, a fixed bed, rotary kiln, fluidized bed, a plasma jet, batch or continuous process can be utilized.

The time required for the low temperature roasting step can readily be determined by making several experimental trials and selecting those which produce the desired results with the lowest temperature and the least time so that output can be optimized and energy consumption can be minimized. Suitable times often will be in the range of about five minutes to 8 hours, preferably about five minutes to 2 hours, and most preferably about 15 minutes to one hour.

If the low temperature roasting step is used, it preferably should be followed-up with wet or dry magnetic separation to remove the iron containing materials which have been converted to magnetic form.

It has been found that low temperature reductive roasting may make phosphorus, aluminum, thorium and uranium, in certain types of ore, more resistant to the reaction process of this invention, especially if acid is used to carry out a leaching process. Therefore, if these impurities are present in appreciable amounts, low temperature reductive roasting may not be suitable. Running a few experimental tests can readily determine whether or not a low temperature reductive roast will be beneficial.

## High Temperature Reductive Roasting of Ore

If the process of this invention carries out a leaching of ore with mineral acid, then, optionally, prior to leaching, the ore can be subjected to a high temperature reductive roasting. It has been found in certain types of ore that such roasting can further reduce the amounts of phosphorus compounds in the ore and lower the temperature needed for the reaction process. If a high temperature reductive roasting is used, it generally will be carried out at a temperature of about 900-1700°C, in the presence of a carbonaceous reducing agent. Suitable carbonaceous reducing agents include coke, lignite char, charcoal, coal, lignite, petroleum such as residual oil, carbon monoxide, producer gas, hydrogen, and natural gas. The roasting should take place under reductive conditions, i.e., in the substantial absence of air or oxygen or under conditions which favor reduction rather than oxidation. A preferred temperature range is about 1000-1500°C. It has also been found that a high temperature reductive roasting can enhance the removal of thorium and uranium, but may be detrimental to the removal of aluminum.

If high temperature roasting is used, it can be carried out by any suitable means, process or device. For example, a fixed bed, rotary kiln, fluidized bed, a plasma jet, batch or continuous process can be utilized.

The time required for the high temperature roasting step can readily be determined by making several experimental trials and selecting those which produce the desired results with the lowest temperature and the least time so that output can be optimized and energy consumption can be minimized. Suitable times often will be in the range of about five minutes to 8 hours, preferably about five minutes to 2 hours, and most preferably about 15 minutes to one hour.

For treatment of titanium-containing ores with mineral acid in accordance with the process of this invention, it is emphasized that generally a low or high temperature reductive roast should not be needed. Thus, for a titanium-containing ores, a substantial advantage of this invention is its potential to operate at lower investment and operating costs because reductive roasting is not needed.

## Preleach of Ore

If desired, prior to the process of this invention, the ore can be subjected to a preleach operation. The purpose of the preleach step is to remove impurities which can be removed with milder conditions than the reacting step described below. Use of the preleach step could enhance the economics of the process and, in some grades of ore, could improve quality, especially for titanium-containing ores..

The acids and concentration of acids described herein for the reacting step can be used. Also, if desired, the spent acid from the leach step can be used as the feed for the preleach step. Suitable temperatures are about 50-100°C, preferably about 60-90°C and most preferably 70-80°C. The pressure ordinarily will be about atmospheric.

## Wash with Alkali Metal Compound

Optionally, for some ores, after the ore is subjected to the process of this invention, it can be subjected to washing with an aqueous solution of an alkali metal compound after the liquid reagent has been removed from the ore. Such washing may be helpful to reduce further the amount of phosphorus, aluminum, and silicon impurities. Washing with an alkali metal compound may be beneficial for $TiO_2$ ores and especially anatase ores.

Suitable alkali metal compounds which can be used include sodium hydroxide, sodium carbonate, potassium hydroxide, potassium carbonate, lithium hydroxide, and lithium carbonate. Preferred are sodium hydroxide and sodium carbonate. Most preferred is sodium hydroxide.

The alkali metal compound should be used in an effective amount, i.e., an amount and concentration sufficient to solubilize substantially at least some of the impurities. Analysis of the leachate, i.e., the solution of the alkali metal compound containing the dissolved impurities, and the leached ore can readily determine whether or not the amount and concentration of alkali metal compound are sufficient. Ordinarily, the concentration of alkali metal compound will be about 3-30 percent, preferably about 5-15 percent, and most preferably about 10-15 percent by weight, based on the total weight of the solution.

The washing treatment with the aqueous solution of an alkali metal compound will take place at a temperature, pressure, and time which is sufficient to solubilize at least some of the remaining mineral impurities. Ordinarily, the time required will be at least about one-half minute. Typical ranges of time are about one-half minute to three hours, preferably about one minute to two hours, and most preferably about one minute to one hour. The temperature ordinarily will be about ambient to about the boiling point of the washing solution. It should be noted that elevated temperature often will decrease the amount of wash time required. Generally, atmospheric pressure will be adequate, although elevated pressures can be used if desired. If only atmospheric pressure is used for this step of the process, after the liquid reagent has been removed from the ore, the washing can be done by spraying alkali solution onto the ore which is on a filter or screen.

## Removing the Leachate

Following the process of this invention, and the alkali metal wash, if used, the liquid reagent is removed from the treated ore. Preferably, this is done by removing the liquid reagent followed by washing with water or by washing with water alone. The liquid reagent can be removed by any suitable means, including filtering, decanting, centrifuging or use of a hydroclone. Preferably, the water will be hot, i.e., up to its boiling point. The amount of washing required can readily be determined by analyzing the wash water for the presence of impurities, acid and/or alkali.

## Use of Treated Ore

After the ore has been treated in accordance with the process of this invention, it can be subjected to additional processes to recover or utilize the desired metallic values. For example, if titanium-containing ore is treated in accordance with the process of this invention, it then can be used to make $TiO_2$ pigment or titanium metal or be used in any process where a beneficiated titanium ore is desired. Preferably, titanium-containing ore treated by the process of this invention can be used to make $TiO_2$ pigment, and most preferably, to make $TiO_2$ pigment by the chloride process. Suitable chloride processes and reactors for using the titanium ore treated in accordance with the process of this invention are disclosed in U.S. Patents 2,488,439, 2,488,440, 2,559,638, 3,203,763, 2,833,626, 3,284,159, and 2,653,078.

## Claims

1. A continuous process for reacting particulate ore with a liquid reagent in a counter-current vertical column, wherein liquid reagent is introduced at the bottom of the column, particulate ore is introduced at the top of the column, reacted particulate ore is removed at the bottom of the column, and spent liquid reagent is removed at the top of the column, characterised by:

   (a) providing an upper and lower chamber for the vertical column, each of said chambers having a bottom outlet with a diameter which is less than that of the diameter of the chamber;

(b) maintaining sufficient upward flow of liquid reagent in the upper chamber so that the particulate ore is wetted and deaerated, at least some fine particles thereof are carried overhead for removal, and the remainder thereof settle and enter the lower chamber;

(c) maintaining sufficient fluidization and retention time in the lower chamber so that at least 10 percent of the theoretical amount of reaction with the ore takes place, a fluidization index is maintained in the lower chamber of 1-2, at least some of the fine ore particles which are generated from the reaction process and/or which are introduced with the particulate ore are entrained and carried upward for removal, and the reacted particulate ore exits the lower chamber.

2. The process of claim 1 wherein the fluidization index in the lower chamber is 1.1-1.9.

3. The process of claim 1 wherein the fluidization index in the lower chamber is 1.4-1.6.

4. The process of claim 1 wherein the fluidization index in the lower chamber is 1.5.

5. The process of any one of the preceding claims wherein the fluidization index in the upper chamber is 5-6.

6. The process of any one of the preceding claims wherein liquid is injected in the outlet or a conduit leading from the outlet of the lower chamber, and said injection is made at a sufficient volume and velocity (a) to cool said reacted particulate ore and liquid reagent exiting the lower chamber, and (b) to restrict the downward flow of said reacted particulate ore and liquid reagent.

7. The process of any one of the preceding claims wherein the outlet for each chamber is funnel shaped, and the diameter of the upper chamber is at least twice that of the lower chamber.

8. The process of any one of the preceding claims wherein the temperature is up to 300°C, and the pressure is up to about 101 bar (100 atmospheres absolute).

9. The process of any one of the preceding claims wherein the temperature is 160-300°C, the pressure is 4.1 to 101 bar (4-100 atmospheres absolute), the ore is titanium-containing, and the liquid reagent is mineral acid.

10. The process of claim 1 wherein:

(a) the fluidization index in the lower chamber is 1-2;

(b) the fluidization index in the upper chamber is 5-6;

(c) the temperature is up to 300°C, and the pressure is up to 101 bar (100 atmospheres absolute);

(d) the ore is titanium-containing; and

(e) the liquid reagent is hydrochloric acid.

11. The process of claim 10 wherein the temperature is 150-250°C.

12. The process of claim 11 wherein water is injected in the outlet or a conduit leading from the outlet of the lower chamber, and said injection is made at a sufficient volume and velocity (a) to cool said reacted particulate ore and acid exiting the lower chamber, and (b) to restrict the downward flow of said acid.

13. The process of claim 12 wherein the outlet for each chamber is funnel shaped, the diameter of the upper chamber is at least about twice that of the lower chamber, the angle of the taper of the funnel is greater than the angle of repose of the particulate ore, and the neck of the funnel shaped outlet for the upper chamber extends into the upper portion of the lower chamber.

14. The process of claim 13 wherein (i) prior to subjecting the particulate ore to reaction with said liquid reagent, the ore is subjected to mineral dressing, and (ii) after the ore has been reacted with said liquid reagent, it is washed with water to remove any residual acid.

15. A continuous process for reacting particulate ore with a liquid reagent in a counter-current vertical column provided with a lower chamber, wherein liquid reagent is introduced at the bottom of the column, particulate ore is introduced at the top of the column, reacted particulate ore is removed at the bottom of the column, and spent liquid reagent is removed at the top of the column, characterised by injecting liquid in the outlet or a conduit leading from the outlet of the column, said injecting being made at a sufficient volume and velocity:

(a) to cool said reacted particulate ore and liquid reagent exiting the lower chamber;

(b) to restrict the downward flow of said reacted particulate ore and liquid reagent; and

(c) to maintain a fluidization index in the lower chamber of 1-2.

16. The process of claim 1 wherein a pressure is maintained in the column of 2.07 to 101 bar (2 to 100 atmospheres absolute).

## Patentansprüche

1. Kontinuierliches Verfahren zur Reaktion von dispersem Erz mit einem flüssigen Reaktanten in einer vertikalen Gegenstromkolonne, worin ein flüssiger Reaktant am Boden der Kolonne eingebracht wird, disperses Erz am Oberteil der Kolonne eingebracht wird, das einer Reaktion unterworfene disperse Erz am Boden der Kolonne entnommen wird und der verbrauchte flüssige Reaktant am Oberteil der Kolonne abgeführt wird, dadurch gekennzeichnet, daß

(a) eine obere und eine untere Kammer für die vertikale Kolonne bereitgestellt wird, wobei jede Kammer jeweils unten einen Auslaß aufweist mit einem Durchmesser, der kleiner ist als der Durchmesser der Kammer;
(b) in der oberen Kammer ein Aufwärtsstrom des flüssigen Reaktanten aufrechterhalten wird, der so groß ist, daß das disperse Erz benetzt und entgast wird, zumindest einige Feinteilchen desselben nach oben mitgerissen und abgeführt werden, und sich der Rest desselben absetzt und in die untere Kammer eintritt;
(c) in der unteren Kammer eine Fluidisierungs- und Haltezeit aufrechterhalten wird, die so lang ist, daß mindestens 10 Prozent des theoretischen Umfangs der Reaktion mit dem Erz stattfindet, in der unteren Kammer ein Fluidisierungsindex von 1 - 2 aufrechterhalten wird, mindestens einige der feinen Erzteilchen, die bei der Reaktion entstehen und/oder mit dem dispersen Erz eingebracht wurden, mitgerissen werden und nach oben geführt und abgeführt werden, und das disperse Erz nach seiner Reaktion aus der unteren Kammer austritt.

2. Verfahren nach Anspruch 1, worin der Fluidisierungsindex in der unteren Kammer 1,1 - 1,9 beträgt.

3. Verfahren nach Anspruch 1, worin der Fluidisierungsindex in der unteren Kammer 1,4 - 1,6 beträgt.

4. Verfahren nach Anspruch 1, worin der Fluidisierungsindex in der unteren Kammer 1,5 beträgt.

5. Verfahren nach einem beliebigen der vorhergehenden Ansprüche, worin der Fluidisierungsindex in der oberen Kammer 5 - 6 beträgt.

6. Verfahren nach einem beliebigen der vorhergehenden Ansprüche, worin Flüssigkeit in den Auslaß oder in eine aus dem Auslaß der unteren Kammer herausführende Leitung eingespritzt wird und das Einspritzen in einer Menge und mit einer Geschwindigkeit erfolgt, die so groß sind, daß (a) das einer Reaktion unterworfene disperse Erz und der flüssige Reaktant, die aus der unteren Kammer austreten, abgekühlt werden, und (b) der Abwärtsstrom des einer Reaktion unterworfenen dispersen Erzes und der des flüssigen Reaktanten eingeschränkt werden.

7. Verfahren nach einem beliebigen der vorhergehenden Ansprüche, worin der Auslaß für jede Kammer trichterförmig ist und der Durchmesser der oberen Kammer mindestens zweimal so groß ist wie derjenige der unteren Kammer.

8. Verfahren nach einem beliebigen der vorhergehenden Ansprüche, worin die Temperatur bis zu 300 °C beträgt und der Druck bis zu etwa 101 bar (100 Atmosphären absolut) beträgt.

9. Verfahren nach einem beliebigen der vorhergehenden Ansprüche, worin die Temperatur 160 - 300 °C beträgt, der Druck 4,1 bis 101 Bar (absoluter Druck von 4 - 100 Atmosphären) beträgt, das Erz titanhaltig ist und der flüssige Reaktant eine Mineralsäure ist.

10. Verfahren nach Anspruch 1, worin:

(a) der Fluidisierungsindex in der unteren Kammer 1-2 beträgt;
(b) der Fluidisierungsindex in der oberen Kammer 5-6 beträgt;
(c) die Temperatur bis zu 300 °C beträgt und der Druck bis zu 101 bar (100 Atmosphären absolut) beträgt;
(d) das Erz titanhaltig ist; und
(e) der flüssige Reaktant Salzsäure ist.

11. Verfahren nach Anspruch 10, worin die Temperatur 150-250°C beträgt.

12. Verfahren nach Anspruch 11, worin in den Auslaß oder in eine aus dem Auslaß der unteren Kammer herausführende Leitung Wasser eingespritzt wird und das Einspritzen in einer Menge und mit einer Geschwindigkeit erfolgt, die so groß sind, daß (a) das einer Reaktion unterworfene disperse Erz und die Säure, die aus der unteren Kammer austreten, abgekühlt werden, und (b) der Abwärtsstrom der Säure eingeschränkt wird.

13. Verfahren nach Anspruch 12, worin der Auslaß für jede Kammer trichterförmig ist, der Durchmesser der oberen Kammer mindestens etwa zweimal so groß ist wie derjenige der unteren Kammer, der Kegelwinkel des Trichters größer ist als der Schüttwinkel des dispersen Erzes und sich das Halsstück des trichterförmigen Auslasses für die obere Kammer in den oberen Bereich der unteren Kammer erstreckt.

**14.** Verfahren nach Anspruch 13, worin (i) das disperse Erz, bevor das Erz einer Reaktion mit dem flüssigen Reaktanten unterzogen wird, mineralisch aufbereitet wird, und (ii) das Erz, nachdem es mit dem flüssigen Reaktanten reagiert hat, mit Wasser gewaschen wird, um etwaige verbliebene Säure zu beseitigen.

**15.** Kontinuierliches Verfahren zur Reaktion von dispersem Erz mit einem flüssigen Reaktanten in einer vertikalen Gegenstromkolonne, die mit einer unteren Kammer versehen ist, worin ein flüssiger Reaktant am Boden der Kolonne eingebracht wird, disperses Erz am Oberteil der Kolonne eingebracht wird, das einer Reaktion unterworfene disperse Erz am Boden der Kolonne entnommen wird und der verbrauchte flüssige Reaktant am Oberteil der Kolonne abgeführt wird, dadurch gekennzeichnet, daß Flüssigkeit in den Auslaß oder in eine aus dem Auslaß der Kolonne herausführende Leitung eingespritzt wird und das Einspritzen in einer Menge und mit einer Geschwindigkeit erfolgt, die so groß sind, daß

(a) das einer Reaktion unterworfene disperse Erz und der flüssige Reaktant, die aus der unteren Kammer austreten, abgekühlt werden,
(b) der Abwärtsstrom des einer Reaktion unterworfenen dispersen Erzes und der des flüssigen Reaktanten eingeschränkt werden, und
(c) in der unteren Kammer ein Fluidisierungsindex von 1 - 2 aufrechterhalten wird.

**16.** Verfahren nach Anspruch 1, worin ein Druck von 2,07 bis 101 bar (absoluter Druck von 2 bis 100 Atmosphären) aufrechterhalten wird.

**Revendications**

**1.** Un procédé continu pour faire réagir un minerai en particules avec un réactif liquide dans une colonne verticale à contre-courant, selon lequel le réactif liquide est introduit au fond de la colonne, le minerai en particules est introduit au sommet de la colonne, le minerai ayant réagi est retiré au fond de la colonne et le réactif liquide usé est retiré au sommet de la colonne, caractérisé par :

(a) l'établissement d'une chambre supérieure et d'une chambre inférieure pour la colonne verticale, chacune desdites chambres ayant une sortie de fond ayant un diamètre qui est inférieur au diamètre de la chambre ;
(b) le maintien dans la chambre supérieure d'un écoulement ascendant de réactif liquide suffisant pour que le minerai en particules soit mouillé et désaéré, au moins certaines de ses fines particules étant entraînées en tête pour être éliminées, le reste de celles-ci se déposant et entrant dans la chambre inférieure ;
(c) le maintien dans la chambre inférieure d'une fluidisation et d'un temps de rétention suffisants, pour qu'il se produise au moins 10 pour cent du degré théorique de réaction avec le minerai, qu'un indice de fluidisation de 1 à 2 soit maintenu dans la chambre inférieure, qu'au moins une partie des fines particules de minerai qui sont engendrées par le processus réactionnel et/ou qui sont introduites avec le minerai en particules soit entraînée et transportée vers le haut pour être éliminée, et que le minerai en particules ayant réagi sorte de la chambre inférieure.

**2.** Le procédé de la revendication 1, dans lequel l'indice de fluidisation dans la chambre inférieure est de 1,1 à 1,9.

**3.** Le procédé de la revendication 1, dans lequel l'indice de fluidisation dans la chambre inférieure est de 1,4 à 1,6.

**4.** Le procédé de la revendication 1, dans lequel l'indice de fluidisation dans la chambre inférieure est de 1,5.

**5.** Le procédé de l'une quelconque des revendications précédentes, dans lequel l'indice de fluidisation dans la chambre supérieure est de 5 à 6.

**6.** Le procédé de l'une quelconque des revendications précédentes, dans lequel un liquide est injecté dans la sortie ou un conduit venant de la sortie de la chambre inférieure, et ladite injection est effectuée à une vitesse et en un volume suffisants pour (a) refroidir ledit minerai en particules ayant réagi et ledit réactif liquide sortant de la chambre inférieure, et (b) limiter l'écoulement descendant dudit minerai ayant réagi et dudit réactif liquide.

**7.** Le procédé de l'une quelconque des revendications précédentes, dans lequel la sortie de chaque chambre est en forme d'entonnoir et le diamètre de la chambre supérieure est d'au moins deux fois celui de la chambre inférieure.

**8.** Le procédé de l'une quelconque des revendications précédentes, dans lequel la température est d'au plus 300°C et la pression absolue est d'au plus 101 bars.

**9.** Le procédé de l'une quelconque des revendications précédentes, dans lequel la température est de 160 à 300°C, la pression absolue est de 4,1 à 101 bars, le minerai contient du titane et le réactif liquide est un acide minéral.

10. Le procédé de la revendication 1, dans lequel :

    (a) l'indice de fluidisation dans la chambre inférieure est de 1 à 2 ;
    (b) l'indice de fluidisation dans la chambre supérieure est de 5 à 6 ;
    (c) la température est d'au plus 300°C et la pression absolue est d'au plus 101 bars ;
    (d) le minerai contient du titane ; et
    (e) le réactif liquide est l'acide chlorhydrique.

11. Le procédé de la revendication 10, dans lequel la température est de 150 à 250°C.

12. Le procédé de la revendication 11, dans lequel de l'eau est injectée dans la sortie ou un conduit venant de la sortie de la chambre inférieure, et ladite injection est effectuée à une vitesse et en un volume suffisants pour (a) refroidir ledit minerai en particules ayant réagi et l'acide sortant de la chambre inférieure, et (b) limiter l'écoulement descendant dudit acide.

13. Le procédé de la revendication 12, dans lequel la sortie de chaque chambre est en forme d'entonnoir, le diamètre de la chambre supérieure est d'au moins environ deux fois celui de la chambre inférieure, l'angle de conicité de l'entonnoir est supérieur à l'angle de talus naturel du minerai en particules, et le col de la sortie en forme d'entonnoir de la chambre supérieure se prolonge dans la portion supérieure de la chambre inférieure.

14. Le procédé de la revendication 13, dans lequel (i) avant de soumettre le minerai en particules à la réaction avec ledit réactif liquide, on soumet ce minerai à une préparation de minéral, et (ii) après avoir réagi avec ledit réactif liquide, le minerai est lavé à l'eau pour éliminer tout acide résiduel.

15. Un procédé continu pour faire réagir un minerai en particules avec un réactif liquide dans une colonne verticale à contre-courant munie d'une chambre inférieure, dans lequel le réactif liquide est introduit au fond de la colonne, le minerai en particules est introduit au sommet de la colonne, le minerai ayant réagi est retiré au fond de la colonne et le réactif liquide usé est retiré au sommet de la colonne, caractérisé par l'injection d'un liquide dans la sortie ou un conduit venant de la sortie de la colonne, ladite injection étant effectuée à une vitesse et en un volume suffisants pour:

    (a) refroidir ledit minerai en particules ayant réagi et ledit réactif liquide sortant de la chambre inférieure ;
    (b) limiter l'écoulement descendant dudit minerai en particules ayant réagi et dudit réactif liquide ; et
    (c) maintenir dans la chambre inférieure un indice de fluidisation de 1 à 2.

16. Le procédé de la revendication 1, dans lequel une pression absolue de 2,07 à 101 bars est maintenue dans la colonne.

EP 0 642 595 B1

FIG.1

ORE IN
1

2
4
3
5 7
39
SPENT ACID
AND FINES
50
8
6
35
34
9
38
41
36
13
10
37
14
ACID IN
11
33
40
12
18
15
16
42
17
19
30
23
47
48
32
24
43
20
27
41
31
45
29
21
44
28
46
22
26
25
49
ORE OUT
WATER/ACID
OUT
MAKE-UP
WATER
IN
ORE IN

12